(19) Europäisches Patentamt / European Patent Office / Office européen des brevets

(11) **EP 4 535 490 A1**

(12) **EUROPEAN PATENT APPLICATION**
published in accordance with Art. 153(4) EPC

(43) Date of publication:
**09.04.2025 Bulletin 2025/15**

(21) Application number: **22943532.6**

(22) Date of filing: **29.11.2022**

(51) International Patent Classification (IPC):
**H01M 10/0565** (2010.01)    **H01M 10/0525** (2010.01)

(52) Cooperative Patent Classification (CPC):
Y02P 70/50

(86) International application number:
**PCT/CN2022/134971**

(87) International publication number:
**WO 2023/226345 (30.11.2023 Gazette 2023/48)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.05.2022   CN 202210581507**

(71) Applicants:
• **REPT BATTERO Energy Co., Ltd.**
**Wenzhou, Zhejiang 325000 (CN)**
• **Shanghai Ruipu Energy Co., Ltd.**
**Shanghai 201206 (CN)**

(72) Inventors:
• **CAO, Hui**
**Wenzhou, Zhejiang 325024 (CN)**

• **CUI, Yi**
**Shanghai 201206 (CN)**
• **HOU, Min**
**Shanghai 201206 (CN)**
• **NIE, Rongrong**
**Shanghai 201206 (CN)**
• **LIU, Chan**
**Shanghai 201206 (CN)**
• **CHEN, Dandan**
**Shanghai 201206 (CN)**
• **LIU, Wei**
**Shanghai 201206 (CN)**

(74) Representative: **Potter Clarkson**
**Chapel Quarter**
**Mount Street**
**Nottingham NG1 6HQ (GB)**

(54) **FREE-RADICAL IN-SITU POLYMERIZATION SEMI-SOLID-STATE BATTERY**

(57)    The present invention discloses a free-radical in-situ polymerization semi-solid-state battery. The free-radical in-situ polymerization semi-solid-state battery comprises a positive electrode, a negative electrode and a semi-solid electrolyte. The semi-solid electrolyte is formed through in-situ polymerization by adding a polymerizable monomer, a plasticizer and an initiator into a liquid electrolyte. The polymerizable monomer is a combination of vinylene carbonate (VC) and trimethylene carbonate (TMC) with a mass ratio of 20 to 35:0.1 to 1.5. By optimizing the components of the gel electrolyte, the impedance of the battery is reduced, the performance of the battery is improved, the hardness of the gel electrolyte is enhanced, the solid-solid interface in the battery is benefited, and the safety of the battery is improved.

Figure 5

EP 4 535 490 A1

## Description

## Technical Field

The present disclosure belongs to the technical field of batteries, relates to the technical field of semi-solid-state batteries, and specifically relates to a free-radical in-situ polymerization semi-solid-state battery.

## Background Art

As the demand for enhancing the energy density of lithium-ion batteries becomes increasingly urgent, traditional lithium-ion batteries have struggled to meet the requirements of ultra-high specific energy. The current commercialized negative electrode materials for lithium batteries are mainly modified natural graphite and artificial graphite. Although the preparation technology is already quite mature, the theoretical specific capacity of graphite is only $372 mAh \cdot g^{-1}$, which is difficult to meet the market demand for high energy density lithium-ion batteries. Therefore, based on the demand of high energy density batteries, negative electrode materials with ultra-high specific energy advantages, such as silicon negative electrodes, metal alloy negative electrodes and metal lithium negative electrodes, have become a research hotspot. Taking silicon negative electrode materials as an example, at present, a certain amount of silicon materials is mainly used to achieve the purpose of increasing the specific capacity. Taking a metal lithium negative electrode as an example, the specific capacity is $3,860 mAh \cdot g^{-1}$, and the electrochemical potential is -3.04V (vs. standard hydrogen electrode). Batteries with these negative electrode materials can effectively improve the energy density, even reaching more than $400Wh\ kg^{-1}$ or even higher. Because of its high activity, medium and high nickel ternary lithium batteries with high specific capacity negative electrode materials possess improved specific energy density, but at the same time, it is important to improve the safety of batteries.

However, based on the traditional lithium-ion battery system, high energy density battery materials still have many safety hazards at present. The material itself undergoes significant volume expansion and structural alterations, as well as poses safety risks and cycling life issues when coupled with liquid electrolytes. Liquid electrolytes are ineffective in suppressing the substantial expansion of the silicon negative electrode, or the structural changes of lithium metal negative electrode and growth of metal dendrites. Moreover, dendrites may pierce the separator, triggering internal short circuits within the battery and causing even greater safety problems.

There have been a lot of developments in gel-type semi-solid-state battery technology. Semi-solid-state batteries can effectively reduce the use of liquid electrolyte in the battery, improve the energy density of batteries, and simultaneously reduce the potential safety hazards caused by liquid electrolyte. Additionally, semi-solid-state gel electrolytes can effectively suppress changes in the negative electrode structure and the growth of metal dendrites to a certain extent, improve the specific energy while greatly enhancing the safety of the battery. However, existing semi-solid-state gel electrolytes often have the disadvantages of high impedance and significant performance loss after polymerization.

Upon searching the existing patent literature, in CN112018438A, vinyl carbonate is used as the gel polymerization monomer, azobisisobutyronitrile is used as the initiator, and an acrylate flexibilizer and a crosslinking agent are matched to initiate in-situ polymerization. However, the composition and content of the components can also lead to a higher impedance and significant performance loss of the battery after polymerization.

## Summary

In view of the above problems, the purpose of the present disclosure is to provide a free-radical in-situ polymerization semi-solid-state battery. The present disclosure uses an in-situ polymerization method to manufacture and produce semi-solid-state batteries, specifically by using a polymerizable monomer, a plasticizer, and an initiator, etc., to form a semi-solid-state electrolyte under certain conditions. The purpose of the present disclosure is to be achieved through the following technical solutions:

The present disclosure discloses a free-radical in-situ polymerization semi-solid-state battery which comprises a positive electrode, a negative electrode and a semi-solid-state electrolyte wherein the semi-solid-state electrolyte is formed through in-situ polymerization by adding a polymerizable monomer, a plasticizer and an initiator into a liquid electrolyte; the polymerizable monomer is a combination of vinylene carbonate (VC) and trimethylene carbonate (TMC) with a mass ratio of (20-35):(0.1-1.5).

A liquid electrolyte comprises a lithium salt. A lithium salt is selected from one or more of lithium hexafluorophosphate $LiPF_6$, lithium difluorophosphate $LiPO_2F_2$, lithium difluorosulfonimide LiFSI, lithium bis(trifluoromethanesulfonyl) imide LiTFSI, lithium trifluoromethyl sulfonate $LiCF_3SO_3$, lithium tetrafluoroborate $LiBF_4$, lithium bisoxalate borate LiBOB, lithium oxalyldifluoro borate LiODFB, and lithium difluoro(bisoxalato)phosphate LiDFBP.

In the present disclosure, the polymerizable monomer is preferably a combination of vinylene carbonate (VC) and trimethylene carbonate (TMC) with a mass ratio of (20-35):(0.1-1.5). Preferably, a total content of polymerizable monomer VC and TMC in a semi-solid-state electrolyte is 20-36.5wt.%, for example 20-30wt.%, 25wt.%, 27wt.%, 29wt.%. Preferably, in a semi-solid-state electrolyte, a content of polymerizable monomer VC is 20-35wt.%, for example 20-29wt.%, 25wt.%, 27wt.%, 28wt.%, a content of TMC is 0.1-1.5wt.%, for example 0.5-1wt.%, 0.7wt.%, 0.9wt.%. In a system of the present disclosure, VC is a main polymerizable monomer, while TMC is an auxiliary polymerizable monomer, both of which are indispensable. The main function of TMC after polymerization is to increase the viscosity of the VC-based semi-solid-state electrolyte after polymerization. If TMC is the main polymerizable monomer and VC is the auxiliary one, the semi-solid-state electrolyte is unstable and cannot be effectively formed.

In some embodiments, a plasticizer is selected from one or more of polyvinyl alcohol PEG, polyethylene glycol dimethyl ether PEGDME, dibutyl phthalate DBP, dimethyl phthalate DMP, dioctyl phthalate DOP, acetonitrile ACN, succinonitrile SN and thermoplastic polyurethane TPU. The plasticizer is preferably succinonitrile SN. Succinonitrile SN has a stable structure and has good ionic conductivity, good thermal stability, and high oxidation stability. The use of succinonitrile SN in the semi-solid-state electrolyte is beneficial to improving the stability of the semi-solid-state electrolyte under high temperature and high voltage, and has less negative influence on impedance and performance.

In some embodiments, an initiator is selected from one or more of 2,2-azobisisobutyronitrile AIBN, azobisisoheptonitrile ABVN, dimethyl 2,2'-azodiisobutyrate AIBME and benzoyl peroxide BPO. An initiator preferably comprises AIBN and BPO, or is composed of AIBN and BPO.

In some preferred embodiments, an initiator is a combination of 2,2-azobisisobutyronitrile AIBN and benzoyl peroxide BPO with a mass ratio of (0.01-4):(0.01-4). In some embodiments, a mass ratio of AIBN and BPO as an initiator is 2:1 to 5:1, for example 3:1 to 4:1. Preferably, in a semi-solid-state electrolyte, a content of initiator AIBN is 0.1-0.5wt.%, for example 0.15-0.2wt.%, and a content of BPO is 0.03-0.1wt.%, for example 0.04-0.06wt.%. Most preferably, in a semi-solid-state electrolyte, a content of AIBN is 0.18wt.% and a content of BPO is 0.05wt.%. The polymerization rate initiated by AIBN is higher and the reaction is more intense, while the polymerization initiated by BRO is relatively mild. The combination of the two can effectively control the polymerization rate, on the one hand, to ensure the effective infiltration of the electrolyte before polymerization, on the other hand, to ensure that the polymerization will not be too intense to destroy the microstructure and morphology of the electrode. If a high content of BPO and a very small amount of AIBN are used, the reaction rate is too slow, the high temperature time required is too long, and the electrode, materials and electrolyte will have undesirable decomposition side reactions under the condition of continuous high temperature.

In some embodiments, in the semi-solid-state electrolyte, a content of a polymerizable monomer is 20-40wt.%, a content of a plasticizer is 0.1-5wt.%, and a content of an initiator is 0.02-8wt.%. Preferably, a content of a polymerizable monomer in a semi-solid-state electrolyte is 20-36.5wt.%, for example 20-30wt.%, 25wt.%, 27wt.%, 29wt.%. Preferably, a content of a plasticizer in a semi-solid-state electrolyte is 0.5-5wt.%, for example 1wt.%, 1.2wt.%, 1.5wt.%, 2wt.%, 2.5wt.%, 3wt.%. Preferably, a content of an initiator in a semi-solid-state electrolyte is 0.1-1wt.%, for example 0.2wt.%, 0.23wt.%, 0.25wt.%, 0.3wt.%, 0.5wt.%.

In some preferred embodiments, a negative electrode is silicon-doped graphite negative electrode, lithium metal negative electrode or metal alloy negative electrode.

In some embodiments, main material (i.e. active material) of a positive electrode is a nickel material, nickel manganese aluminum material NCA, lithium ferromanganese phosphate LMFP or lithium iron phosphate LiFePO4.

In some embodiments, a silicon-doped graphite negative electrode has a silicon content of 3%-80%, preferably 5-60%, for example 5-30%, and further preferably 8-30%.

A metal alloy negative electrode suitable for the present disclosure comprises Ga-Sn, Ge-Se, or Sn-Al negative electrode.

In some embodiments, a nickel material comprises one or more selected from NCM811, Ni90, NCM111, NCM532, NCM622 and NCM712.

In some embodiments, the positive electrode and the negative electrode both comprise a conductive agent. A conductive agent suitable for the present disclosure comprises one or more selected from carbon black super P, acetylene black, and carbon nanotubes. Carbon nanotubes can be selected from one or more of multi-walled carbon nanotubes MWCNT and single-walled carbon nanotubes SWCNT.

In some embodiments, the positive electrode and the negative electrode both comprise a binder. A binder can be selected from one or more of polyethylene oxide PEO, polyvinylidene fluoride PVDF, carboxymethyl cellulose sodium CMC-Na, polyurethane PU, styrene butadiene rubber SBR, polyvinyl alcohol PVA, polyacrylic acid PAA and polyacrylonitrile PAN.

In some preferred embodiments, a temperature of the in-situ polymerization is 58-65°C, and a time of the in-situ polymerization is 1.25-3h. Some additives in the electrolyte may become unstable at high temperature for a long time, and it is easy to cause undesirable decomposition side reactions with the electrode material. Therefore, it is necessary to control the temperature not too high and the time not too long.

The present disclosure also provides a method for preparing the free-radical in-situ polymerization semi-solid-state battery according to any of the embodiments described in this paper, which comprises the following steps:

(1) injecting a liquid electrolyte into a cell, adding a polymerizable monomer, a plasticizer and an initiator into the liquid electrolyte;

(2) subjecting the liquid electrolyte for in-situ polymerization to form the semi-solid-state electrolyte.

In some embodiments, in step (2), the battery is aged before the in-situ polymerization, and the battery can be subjected to formation, aging and capacity grading after in-situ polymerization.

Compared with the existing technology, the present disclosure has the following beneficial effects:

1) by improving the gel electrolyte (semi-solid-state electrolyte) components, the present disclosure obtains lower battery impedance and improves battery performance. When the polymerizable monomer is preferably selected as a combination of vinylene carbonate and trimethylene carbonate, the gel electrolyte can be adjusted to improve its hardness, so that the gel electrolyte is in a viscous state between the pores of the electrode particles, and between the electrode and the separator, which makes it possible for lithium ions to be effectively transmitted and for the electrode particles to be in contact and bonded, which is beneficial to the effective contact and ion transmission between the solid-solid interfaces in the battery;

2) the present disclosure improves the battery safety through the optimization of the components. For example, the use of plasticizer succinonitrile is beneficial to improving the flexibility of the gel electrolyte and helping to improve the battery safety;

3) in the present disclosure, the initiator is preferably a combination of 2,2-azobisisobutyronitrile and a small amount of benzoyl peroxide; 2,2-azobisisobutyronitrile reacts too quickly, while the polymerization reaction of benzoyl peroxide is gentler. Therefore, the two materials are used in a specific combination to facilitate a gradual in-situ polymerization reaction during the battery production process, which is more conducive to the formation of in-situ gel electrolyte;

4) the present disclosure improves the battery production process. The in-situ polymerization of the present disclosure has lower temperature and faster polymerization, which can effectively improve efficiency and reduce production costs. Moreover, it is produced, in-situ polymerized, and gelled in actual batteries, which is more suitable for actual battery production lines and can better improve efficiency and reduce costs.

## Description of drawings

Other characteristics, objects and advantages of the present disclosure will become more apparent by reading the detailed description of non-limiting embodiments made with reference to the following drawings:

Figure 1 shows a schematic diagram of a production process of semi-solid-state batteries;

Figure 2 is an inverse diagram of the semi-solid-state electrolyte used in Example 3;

Figure 3 shows the impedance diagram of the conductivity test of the semi-solid-state electrolyte in Example 3;

Figure 4 shows the results of lithium transference number test for the semi-solid-state electrolyte in Example 3, including (a) lithium symmetric impedance spectrum of the initial and steady state and (b) the polarization current diagram obtained by the chronoamperometry method.

Figure 5 shows the normal temperature impedance diagram of the semi-solid-state batteries in Examples 1-7.

## Detailed Description

The present disclosure will be described in detail below in conjunction with examples. The following examples will help those skilled in the art to further understand the present disclosure, but do not limit the present disclosure in any form. It should be noted that those skilled in the art can make some adjustments and improvements without departing from the concept of the present disclosure. These all belong to the protection scope of the present disclosure.

In the free-radical in-situ polymerization semi-solid-state battery of the present disclosure, the main material of the negative electrode layer (i.e., the negative electrode active material) is preferably silicon-doped graphite, lithium metal, or metal alloy. Silicon-doped graphite comprises silicon-containing materials as well as graphite. The silicon-containing materials comprise one or more of silicon oxide materials and silicon carbon materials. When using silicon-doped graphite as the negative electrode active material, the silicon-doped amount of silicon-doped graphite (the mass fraction of the silicon-containing material in the silicon-doped graphite) can be 3%-80%, preferably 5-60%, for example 5-30%, and further preferably 8-30%. Available metal alloys comprise Ga-Sn alloy, Ge-Se alloy, and Sn-Al alloy, etc.

In the present disclosure, the main material of the positive electrode layer (i.e., the positive electrode active material) is preferably a high-nickel material (i.e., $LiNi_xCo_yMn_zO_2$, wherein $x \geq 0.8$, such as NCM811 and Ni90 material). It also can be NCM111, NCM532, NCM622, NCM712, nickel manganese aluminum material NCA, lithium ferromanganese phosphate LMFP or lithium iron phosphate LiFePO4.

Both the positive and negative electrode require a conductive agent. The conductive agent suitable for the present disclosure can be one or more of carbon black super P, acetylene black, multi-walled carbon nanotubes (MWCNT), and single-walled carbon nanotubes (SWCNT). The positive and negative electrode also contain a binder. The binder suitable for the present disclosure can be one or more of PEO (polyethylene oxide), PVDF (polyvinylidene fluoride), CMC-Na (carboxymethyl cellulose sodium), PU (polyurethane), SBR (styrene butadiene rubber), PVA (polyvinyl alcohol), PAA (polyacrylic acid), and PAN (polyacrylonitrile).

In the present disclosure, the content of the active material, the conductive agent and the binder in the positive and negative electrode can be conventional.

In the present disclosure, the semi-solid-state electrolyte is formed by polymerizing a polymerizable monomer, a plasticizer, and an initiator adding into a liquid electrolyte.

The liquid electrolyte suitable for the present disclosure can be a conventional liquid electrolyte for lithium batteries. The liquid electrolyte contains a lithium salt. The available lithium salt comprises one or more of lithium hexafluorophosphate LiPF6, lithium difluorophosphate LiPO2F2, lithium difluorosulfonimide LiFSI, lithium bis(trifluoromethanesulfonyl)imide LiTFSI, lithium trifluoromethyl sulfonate LiCF3SO3, lithium tetrafluoroborate LiBF4, lithium bisoxalate borate LiBOB, lithium oxalyldifluoro borate LiODFB, and lithium difluoro(bisoxalato)phosphate LiDFBP. The concentration of the lithium salt in the liquid electrolyte can be conventional, such as 0.5-2mol/L. The liquid electrolyte also contains an organic solvent. The organic solvent can be a carbonate-based solvent. The available carbonate-based solvent includes, but is not limited to, one or more selected from ethylene carbonate (EC), propylene carbonate (PC), butylene carbonate, dimethyl carbonate (DMC), diethyl carbonate (DEC), and ethyl methyl carbonate (EMC); two or more preferred. Preferably, the carbonate-based solvent comprises at least one cyclic carbonate and at least one linear carbonate. Examples of cyclic carbonates include EC, PC, and butylene carbonate. Examples of linear carbonates include DMC, DEC, and EMC. The mass ratio of the cyclic carbonate to the linear carbonate can be 1:5 to 5:1, for example, 1:3, 1:2, or 1:1. The liquid electrolyte may also contain additives as needed, such as fluoroethylene carbonate (FEC) and ethylene sulfate (DTD). The amount of the additive can be conventional.

In the present disclosure, the polymerizable monomer is a monomer with unsaturated double or triple bonds, preferably a combination of VC (vinylene carbonate) and TMC (trimethylene carbonate).

In the present disclosure, the plasticizer can be one or more selected from PEG (polyvinyl alcohol), PEGDME (polyethylene glycol dimethyl ether), DBP (dibutyl phthalate), DMP (dimethyl phthalate), DOP (dioctyl phthalate), ACN (acetonitrile), SN (succinonitrile), and TPU (thermoplastic polyurethane), preferably SN. The initiator can be one or more selected from AIBN (2,2-azobisisobutyronitrile), azobisisoheptonitrile (ABVN), 2,2'-azodiisobutyrate (AIBME), and BPO (benzoyl peroxide), preferably a combination of AIBN and SN.

In some preferred embodiments, the polymerizable monomer is a combination of vinylene carbonate VC and trimethylene carbonate TMC with a mass ratio of (20-35):(0.1-1.5); the initiator is a combination of 2,2-azobisisobutyronitrile AIBN and benzoyl peroxide BPO; in the semi-solid-state electrolyte, the content of polymerizable monomer VC is 20-35wt.%, the content of TMC is 0.1-1.5wt.%; the content of the plasticizer is 0.1-5wt.%, preferably 1.2-3wt.%; the content of the initiator AIBN is 0.01-4wt.%, the content of BPO is 0.01-4wt.%, preferably, the content of AIBN is 0.1-0.5wt.%, the content of BPO is 0.03-0.1wt.%.

In some embodiments, when preparing the free-radical in-situ polymerization semi-solid-state battery according to the present disclosure, the assembled battery is injected with a liquid, and then aged at a temperature of 20-50°C, preferably 45-48°C, and the aging time can be 12-36h, for example 24h. Then the battery is placed in a high temperature environment for gelation reaction. The high temperature is 50-70°C, preferably 58-65°C. The reaction time is 0.5-24h, preferably 1.25-3h. Then the battery is subjected to formation, aging, and capacity grading to obtain a finished cell.

The present disclosure is illustrated by way of specific examples below. It should be understood that these examples are merely explanatory and is not intended to limit the scope of the present disclosure. Unless otherwise specified, the methods, reagents and materials used in the following examples are conventional in the art. The raw materials used in the examples are commercially available.

**Examples 1-7**

Examples 1-7 provide a series of free-radical in-situ polymerization semi-solid-state batteries, comprising a positive electrode, a negative electrode and a semi-solid-state electrolyte.

The process for preparing the battery is as follows:
Firstly, the slurries are mixed, the mass ratio of dry substances in the positive electrode slurry is as follows: 9-series ternary material (NCM-Ni90, $LiNi_{0.9}Co_{0.05}Mn_{0.05}O_2$): conductive carbon black (Super P): carbon nanotubes (CNT800): binder (polyvinylidene fluoride PVDF_1100) is 97:1.1:0.8:1.1, with the solvent of N-methylpyrrolidone (NMP).

For the negative electrode slurry, the mass ratio of dry substances is as follows: graphite (BF): silicon oxide material (silicon monoxide SiO): conductive carbon black (Super P): carbon nanotubes (CNT800): binder (polyacrylic acid PAA): binder (styrene butadiene rubber SBR) is 88.1:6.5:1.8:0.2:1.2:2.2, with the solvent of deionized water.

Then the coating is carried out. The positive electrode slurry is coated onto aluminum foil and the negative electrode slurry is coated onto copper foil, then dried and wound. After that, rolling is conducted. The compaction density of the positive electrode is 3.48g·cm$^{-3}$ and that of the negative electrode is 1.67g·cm$^{-3}$, and then slitting is performed. Afterwards, the electrode core is wound using the positive and negative electrodes and the separator. The separator adopts a PE composite separator (3$\mu$m PVDF adhesive layer + 9$\mu$m PE base film + 3$\mu$m Al$_2$O$_3$ ceramic layer + 3$\mu$m PVDF adhesive layer). After the wound electrode core is hot-pressed, the top cover is welded, and then assembled them into the shell to form a dry cell.

The dry cell is baked and then injected with liquid.

The mass ratio of each component in the electrolyte of the semi-solid-state electrolyte is as follows: ethylene carbonate (EC): ethyl methyl carbonate (EMC): diethyl carbonate (DEC): LiPF$_6$: LiFSI: LiPO$_2$F$_2$: fluoroethylene carbonate (FEC): ethylene sulfate (DTD) is 22:28.2:20:12:12:0.5:4.5:0.8, which remains constant in each example. The other components and dosages in the semi-solid-state electrolyte are shown in Table 1 respectively.

The batteries after impregnation undergo formation, gelation processes and capacity grading to obtain the finished cells.

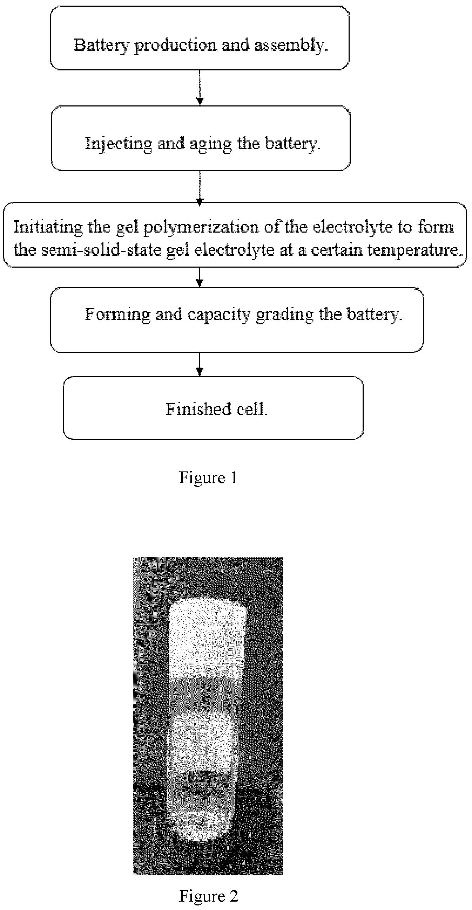

The preparation process is shown in Figure 1. The battery is assembled following the normal battery production process. The assembled battery is injected with electrolyte (by adding the polymerizable monomer, plasticizer and initiator as shown in Table 1 into the liquid electrolyte), and then aged after injected. The aging temperature is 45°C, and the time of aging is 24h. Then place the battery in a high-temperature environment for gelation reaction at 60°C for 2h to trigger the gel polymerization of the electrolyte to form the semi-solid-state electrolyte. Then, the battery is formed under high-temperature and highpressure conditions (the temperature is 40 ± 5°C, and the pressure is controlled by the fixture at 2,000N), aged at 45°C and capacity graded at room temperature to obtain the finished cells.

**Comparative Examples 1-5**

Comparative Examples 1-5 provide a series of free-radical in-situ polymerization semi-solid-state batteries, which are basically the same as Example 1, and the difference is the composition of the semi-solid-state electrolyte, which is shown in Table 1. In Table 1, ETPTA is trimethylolpropane triacrylate monomer.

Table 1: the composition and amount of the semi-solid-state electrolyte except electrolyte in each Example and Comparative Example

| | Examples | | | | | | | Comparative Examples | | | | |
|---|---|---|---|---|---|---|---|---|---|---|---|---|
| | 1 | 2 | 3 | 4 | 5 | 6 | 7 | 1 | 2 | 3 | 4 | 5 |
| VC | 20% | 35% | 29% | 35% | 35% | 35% | 35% | 35% | 35% | 36.5% | | 35% |
| TMC | 0.5% | 1.5% | 1% | 1.5% | 1.5% | 1.5% | 1.5% | 2% | 0.5% | | 36.5% | |
| ETPTA | | | | | | | | | | | | 0.5% |
| DBP | | | | | | | 2% | | | | | |
| SN | 2% | 2% | 2% | 2% | 2% | 2% | | 2% | | 2% | 2% | 2% |
| AIBN | 0.18% | 0.18% | 0.18% | 0.23% | | | 0.18% | 0.18% | 0.18% | 0.18% | 0.18% | 0.18% |
| BPO | 0.05% | 0.05% | 0.05% | | 0.23% | | 0.05% | 0.05% | 0.05% | 0.05% | 0.05% | 0.05% |
| AIBME | | | | | | 0.23% | | | | | | |
| Note: The amount is expressed as a weight percentage (wt.%) relative to the total weight of the semi-solid-state electrolyte. | | | | | | | | | | | | |

Figure 2 shows a photo of the synthesized semi-solid-state electrolyte (Example 3) in an inverted state, indicating that it is a viscous solid rather than a liquid.

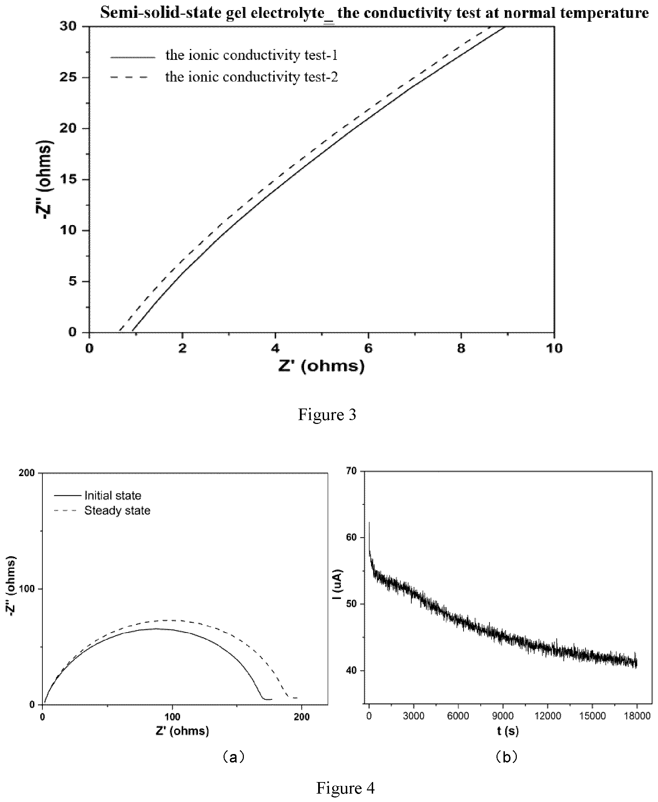

The impedance diagram of the conductivity test of the semi-solid-state electrolyte obtained in Example 3 at normal temperature is shown in Figure 3, and the ionic conductivity is calculated to be approximately 2-3mS/cm at normal temperature.

The method of the impedance diagram of the normal temperature conductivity test and the calculation method of the ionic conductivity are as follows: the semi-solid-state electrolyte obtained in Example 3 is assembled into a steel sheet symmetrical button cell for testing, and the semi-solid-state electrolyte in the Example 3 is filled between the steel sheets, and then the button cell is connected to an electrochemical workstation. A disturbance voltage of 5mV is applied, and the frequency is scanned from 100kHz to 1Hz to test the Nyquist spectrum (EIS impedance diagram) of the battery. The thickness and area of the semi-solid-state electrolyte are measured, and the ionic conductivity of the semi-solid-state electrolyte is calculated from the intersection point of the Nyquist curve and the X axis.

The lithium symmetric impedance diagram (EIS impedance diagram) of the lithium transference number testing and the polarization current diagram obtained by the chronoamperometry method of the semi-solid-state electrolyte produced in Example 3, are shown in Figure 4. The calculated result of the lithium transference number is approximately 0.512.

The test method of lithium symmetric impedance diagram and the polarization current diagram, and the calculation method of the lithium transference number are as follows: the semi-solid-state electrolyte obtained in Example 3 is assembled into a lithium sheet symmetrical button cell for testing, and the semi-solid-state electrolyte in the Example 3 is filled between the lithium sheets, and then the button cell is connected to an electrochemical workstation. A disturbance voltage of 10mV is applied, and the frequency is scanned from 100kHz to 0.5Hz to test the Nyquist spectrum (the initial state of EIS impedance diagram) of the battery, and the initial impedance value $R_0$ is read. After that, the chronoamperometry method is used, with the same 10mV voltage applied to measure the initial current $I_0$. Then, the continuous polarization is conducted until the current stabilized (approximately 18,000s later), and the polarization current diagram is obtained, from which the steady state current value $I_{ss}$ is read. Similarly, the Nyquist spectrum after polarization is tested (the steady state of EIS impedance diagram), and the steady state impedance value $R_{ss}$ is read. The lithium transference number is calculated using the following formula:

$$t_{Li^+} = \frac{I_{ss}(V - I_0 \times R_o)}{I_0(V - I_{ss} \times R_{ss})}$$

Wherein, V is the applied voltage, $R_0$ is the initial impedance, $R_{ss}$ is the steady state impedance, $I_0$ is the initial current value, and $I_{ss}$ is the steady state current value. $t_{Li}{}^+$ is the lithium transference number.

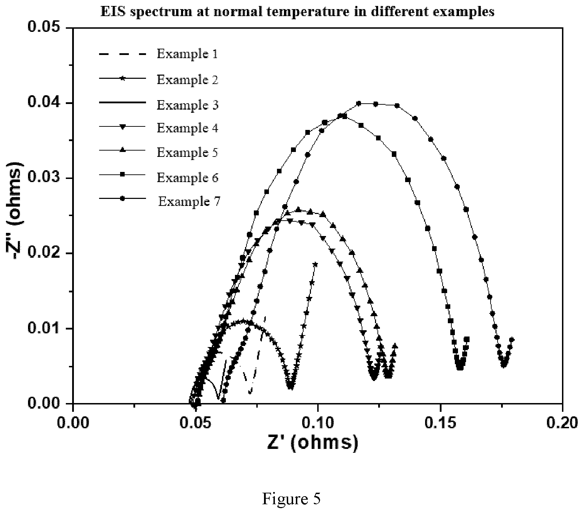

The normal temperature impedance (EIS) diagrams of the semi-solid-state batteries in Examples 1-7 are shown in Figure 5. The method for testing the impedance at normal temperature is as follows: The batteries in Examples 1-7 are connected to an electrochemical workstation, and a 300mA of disturbance current is applied. The frequency is scanned from 200kHz to 0.05Hz, and the Nyquist spectrum of the battery is tested, and the impedance value is read. From Figure 5, it can be seen that the impedance of Examples 1-3 is low, and the lowest impedance is that of Example 3.

Table 2 shows the performance of the semi-solid-state electrolytes in the full battery in Examples 1-7 and Comparative Examples 1-5. The method for testing the impedance is as follows: the battery is connected to an electrochemical workstation, and a 10mV of disturbance voltage is applied. The frequency is scanned from 200kHz to 0.05Hz, and the Nyquist spectrum of the battery is tested, and the impedance value is read.

The determination method of the hardness is as follows: a 1cm thickness of semi-solid-state electrolyte sheet is made, and the semi-solid-state electrolyte sheet is squeezed using a glass rod, and its squeezing state is observed. If the semi-solid-state electrolyte is visually crystalline and cannot be squeezed, it is determined to be hard. If the semi-solid-state electrolyte is visually elastic and can be slightly squeezed, it is determined to be relatively hard. If the semi-solid-state electrolyte is visually in a viscous paste state and can be squeezed to a greater extent, it is determined to be slightly hard. If the semi-solid-state electrolyte is visually in a viscous state and the glass rod can be easily inserted into the semi-solid-state electrolyte, it is determined to be moderate. If the semi-solid-state electrolyte is always in a near-fluid state, it is determined to be softer.

The method for the battery oven testing is as follows: the battery obtained from the Examples are subjected to an oven test according to the SAE-J2464 stepped temperature testing method. The battery can withstand the higher temperature (the highest-temperature platform corresponding to the battery without causing a thermal runaway, fire, or explosion), the better the thermal stability of the battery.

Table 2: the performance comparison of the semi-solid-state electrolytes in the full battery in each Example and Comparative Example

| Performance | Examples | | | | | | | Comparative Examples | | | | |
|---|---|---|---|---|---|---|---|---|---|---|---|---|
| | 1 | 2 | 3 | 4 | 5 | 6 | 7 | 1 | 2 | 3 | 4 | 5 |
| Impedance /mΩ | 23.5 | 39.3 | 11.8 | 73.1 | 75.6 | 103.4 | 120.5 | 129.7 | 143.9 | 136.2 | 183.4 | 156.2 |
| Hardness | moderate | relatively hard | moderate | relatively hard | relatively hard | relatively hard | relatively hard | relatively hard | slightly hard | hard | softer | slightly hard |

(continued)

| Performance | Examples | | | | | | | Comparative Examples | | | | |
|---|---|---|---|---|---|---|---|---|---|---|---|---|
| | 1 | 2 | 3 | 4 | 5 | 6 | 7 | 1 | 2 | 3 | 4 | 5 |
| The temperature of oven /°C | 155 | 150 | 170 | 135 | 140 | 120 | 120 | 115 | 90 | 105 | 100 | 105 |

By comparing Example 2 and Comparative Example 1, it can be seen when the amount of TMC in the semi-solid-state electrolyte is too high, the impedance of the battery is large.

It can be seen from Comparative Example 2 that, without adding plasticizer to the semi-solid-state electrolyte, the battery's impedance is large.

It can be seen from Comparative Examples 3 and 4 (both compared with Example 2) that when the semi-solid-state electrolyte uses only one of the monomers of vinylene carbonate or trimethylene carbonate, the battery's impedance is large.

It can be seen from Comparative Example 5 that, when the semi-solid-state electrolyte uses vinylene carbonate and trimethylolpropane triacrylate, the battery's impedance is large.

It can be seen from comparing Examples 2 and 4-6 that, using a combination of AIBN and BPO as an initiator in the semi-solid-state electrolyte is more beneficial than using AIBN, BPO, or AIBME alone in lowering the battery's impedance.

It can be seen from comparing Example 2 and Example 7 that, using SN as a plasticizer **in** the semi-solid-state electrolyte is more beneficial than using DBP **in** lowering the battery's impedance.

It should be noted that the present disclosure is not limited to lithium ion batteries, but also applies to other types of electrochemical systems batteries for making sodium ion semi-solid-state batteries, potassium ion semi-solid-state batteries, magnesium ion semi-solid-state batteries, and aluminum ion semi-solid-state batteries, by simply replacing the positive and negative electrode materials and lithium salts with corresponding sodium materials and sodium salts, potassium materials and potassium salts, magnesium materials and magnesium salts, and aluminum materials and aluminum salts.

The specific examples of the present disclosure have been described above in detail. It should be understood that the present disclosure is not limited to the specific embodiments described above, and those skilled in the art may make various changes or modifications within the scope of the claims, which do not affect the essence of the present disclosure.

## Claims

1. A free-radical in-situ polymerization semi-solid-state battery comprising a positive electrode, a negative electrode and a semi-solid-state electrolyte, wherein the semi-solid-state electrolyte is formed through in-situ polymerization by adding a polymerizable monomer, a plasticizer and an initiator into a liquid electrolyte; the polymerizable monomer is a combination of vinylene carbonate and trimethylene carbonate with a mass ratio of (20-35):(0.1-1.5).

2. The free-radical in-situ polymerization semi-solid-state battery according to claim 1, wherein the liquid electrolyte comprises a lithium salt; the lithium salt is selected from one or more of lithium hexafluorophosphate, lithium difluorophosphate, lithium difluorosulfonimide, lithium bis(trifluoromethanesulfonyl)imide, lithium trifluoromethyl sulfonate, lithium tetrafluoroborate, lithium bisoxalate borate, lithium oxalyldifluoro borate, and lithium difluoro(bisoxalato)phosphate.

3. The free-radical in-situ polymerization semi-solid-state battery according to claim 1, wherein the plasticizer is selected from one or more of polyvinyl alcohol, polyethylene glycol dimethyl ether, dibutyl phthalate, dimethyl phthalate, dioctyl phthalate, acetonitrile, succinonitrile and thermoplastic polyurethane.

4. The free-radical in-situ polymerization semi-solid-state battery according to claim 1, wherein the plasticizer is succinonitrile.

5. The free-radical in-situ polymerization semi-solid-state battery according to claim 1, wherein the initiator is selected from one or more of 2,2-azobisisobutyronitrile, azobisisoheptonitrile, dimethyl 2,2'-azodiisobutyrate and benzoyl peroxide.

6. The free-radical in-situ polymerization semi-solid-state battery according to claim 4, wherein the initiator is a combination of 2,2-azobisisobutyronitrile and benzoyl peroxide with a mass ratio of (0.01-4):(0.01-4).

7. The free-radical in-situ polymerization semi-solid-state battery according to claim 1, wherein in the semi-solid-state electrolyte, a content of the polymerizable monomer is 20-40wt.%, a content of the plasticizer is 0.1-5wt.%, a content of the initiator is 0.02-8wt.%.

8. The free-radical in-situ polymerization semi-solid-state battery according to claim 1, wherein in the semi-solid-state electrolyte, a content of the polymerizable monomer is 20-36.5wt.%.

9. The free-radical in-situ polymerization semi-solid-state battery according to claim 1, wherein the negative electrode is silicon-doped graphite negative electrode, lithium metal negative electrode or metal alloy negative electrode, an active material of the positive electrode is a nickel material, a nickel manganese aluminum material, lithium ferromanganese phosphate or lithium iron phosphate.

10. The free-radical in-situ polymerization semi-solid-state battery according to claim 1, wherein the nickel material comprises one or more selected from NCM811, Ni90, NCM111, NCM532, NCM622 and NCM712.

11. The free-radical in-situ polymerization semi-solid-state battery according to claim 1, wherein the positive electrode and the negative electrode both comprise a conductive agent and a binder; the conductive agent comprises one or more selected from carbon black, acetylene black, and carbon nanotubes; the binder is selected from one or more of polyethylene oxide, polyvinylidene fluoride, carboxymethyl cellulose sodium, polyurethane, styrene butadiene rubber, polyvinyl alcohol, polyacrylic acid and polyacrylonitrile.

12. The free-radical in-situ polymerization semi-solid-state battery according to claim 1, wherein a temperature of the in-situ polymerization is 58-65°C, a time of the in-situ polymerization is 1.25-3h.

13. A method for preparing the free-radical in-situ polymerization semi-solid-state battery according to any one of claims 1-12, wherein the method comprises the following steps:

    (1) injecting a liquid electrolyte into a cell, adding a polymerizable monomer, a plasticizer and an initiator into the liquid electrolyte;
    (2) subjecting the liquid electrolyte for in-situ polymerization to form the semi-solid-state electrolyte.

```
┌─────────────────────────────────────┐
│   Battery production and assembly.   │
└─────────────────────────────────────┘
                    │
                    ▼
┌─────────────────────────────────────┐
│   Injecting and aging the battery.  │
└─────────────────────────────────────┘
                    │
                    ▼
┌──────────────────────────────────────────────────────────┐
│  Initiating the gel polymerization of the electrolyte to form │
│  the semi-solid-state gel electrolyte at a certain temperature. │
└──────────────────────────────────────────────────────────┘
                    │
                    ▼
┌─────────────────────────────────────┐
│  Forming and capacity grading the battery. │
└─────────────────────────────────────┘
                    │
                    ▼
┌─────────────────────────────────────┐
│            Finished cell.            │
└─────────────────────────────────────┘
```

Figure 1

Figure 2

Figure 3

Figure 4

Figure 5

## INTERNATIONAL SEARCH REPORT

| International application No. |
|---|
| **PCT/CN2022/134971** |

| A. | CLASSIFICATION OF SUBJECT MATTER |
|---|---|
| | H01M10/0565(2010.01)i;H01M10/0525(2010.01)i |

According to International Patent Classification (IPC) or to both national classification and IPC

| B. | FIELDS SEARCHED |
|---|---|

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; DWPI; ENTXT; CNKI; STN: 电池, 半固态, 电解质, 原位, 聚合, 碳酸亚乙烯酯, 三亚甲基碳酸酯, battery, semi-solid, electrolyte, in situ, polymerization, vinylene carbonate, trimethylene carbonate

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 115000491 A (SHANGHAI RUIPU QINGCHUANG NEW ENERGY CO., LTD.) 02 September 2022 (2022-09-02) <br> description, paragraphs 6-61 | 1-13 |
| Y | CN 112018438 A (SVOLT ENERGY TECHNOLOGY CO., LTD.) 01 December 2020 (2020-12-01) <br> description, paragraphs 11-170 | 1-13 |
| Y | JP 2003243035 A (HITACHI LTD. et al.) 29 August 2003 (2003-08-29) <br> description, paragraphs 8-96 | 1-13 |
| A | CN 112701358 A (CHENGDU NEW KELI CHEMICAL TECHNOLOGY CO., LTD.) 23 April 2021 (2021-04-23) <br> entire document | 1-13 |
| A | CN 114300742 A (HUAZHONG UNIVERSITY OF SCIENCE AND TECHNOLOGY) 08 April 2022 (2022-04-08) <br> entire document | 1-13 |
| A | CN 114335536 A (NO.18 RESEARCH INSTITUTE OF CETC) 12 April 2022 (2022-04-12) <br> entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 February 2023** | **20 February 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

International application No.

**PCT/CN2022/134971**

| Patent document cited in search report | | | Publication date (day/month/year) | Patent family member(s) | | | Publication date (day/month/year) |
|---|---|---|---|---|---|---|---|
| CN | 115000491 | A | 02 September 2022 | None | | | |
| CN | 112018438 | A | 01 December 2020 | WO | 2022041702 | A1 | 03 March 2022 |
| | | | | CN | 112018438 | B | 04 March 2022 |
| JP | 2003243035 | A | 29 August 2003 | None | | | |
| CN | 112701358 | A | 23 April 2021 | None | | | |
| CN | 114300742 | A | 08 April 2022 | None | | | |
| CN | 114335536 | A | 12 April 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 112018438 A